(19) Europäisches Patentamt
European Patent Office
Office européen des brevets

(11) **EP 1 861 680 B1**

(12) **FASCICULE DE BREVET EUROPEEN**

(45) Date de publication et mention
de la délivrance du brevet:
**05.06.2013 Bulletin 2013/23**

(21) Numéro de dépôt: **06709346.8**

(22) Date de dépôt: **20.02.2006**

(51) Int Cl.:
***G01C 19/56*** *(2012.01)*

(86) Numéro de dépôt international:
**PCT/FR2006/000378**

(87) Numéro de publication internationale:
**WO 2006/090053 (31.08.2006 Gazette 2006/35)**

(54) **Procédé de mesure gyrométrique compensée en température et dispositif de mesure gyrométrique en faisant application**

Temperaturkompensiertes gyrometrisches Messverfahren und entsprechende gyrometrische Vorrichtung

Method of temperature-compensated gyrometric measurement and gyrometric measurement device using same

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **25.02.2005 FR 0501952**

(43) Date de publication de la demande:
**05.12.2007 Bulletin 2007/49**

(73) Titulaire: **SAGEM Défense Sécurité**
**75015 Paris (FR)**

(72) Inventeur: **BEITIA, José**
**F-95390 SAINT PRIX (FR)**

(74) Mandataire: **Cabinet Plasseraud**
**52, rue de la Victoire**
**75440 Paris Cedex 09 (FR)**

(56) Documents cités:
**US-A- 4 479 098    US-A- 5 806 364**

• **PATENT ABSTRACTS OF JAPAN vol. 016, no. 078 (P-1317), 25 février 1992 (1992-02-25) -& JP 03 267712 A (TOKIMEC INC), 28 novembre 1991 (1991-11-28)**

EP 1 861 680 B1

**Description**

La présente invention concerne d'une façon générale le domaine de la mesure gyrométrique et, plus précisément, elle concerne des perfectionnements apportés aux procédés de mesure gyrométrique compensée en fonction de la température interne instantanée d'un résonateur dans un dispositif de mesure gyrométrique comportant:

- au moins un résonateur mécanique,
- une boucle de contrôle de l'amplitude de la vibration du résonateur mécanique, et
- une boucle gyrométrique propre à délivrer un signal gyrométrique de sortie.

L'invention concerne également un dispositif de mesure gyrométrique mettant en oeuvre ledit procédé perfectionné.

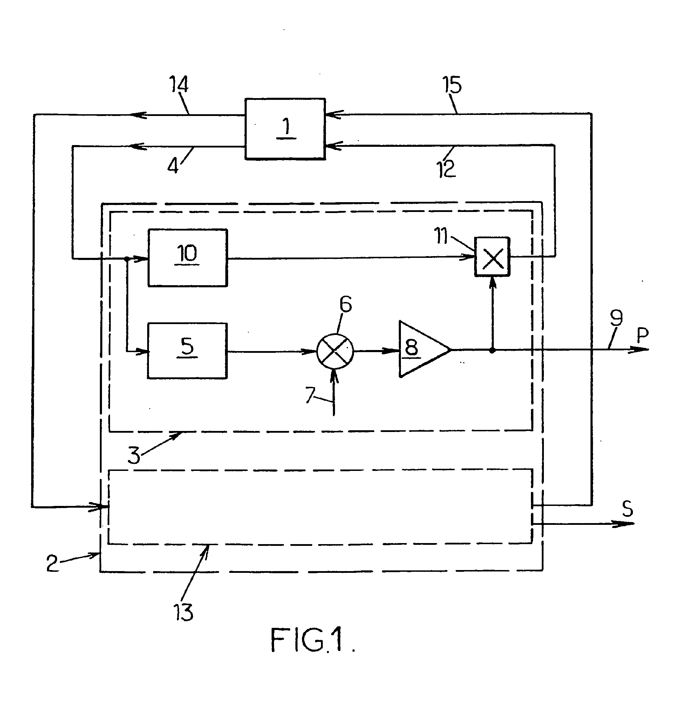

A la figure 1 du dessin annexé est illustré très schématiquement, sous forme de blocs fonctionnels, un dispositif conventionnel de mesure gyrométrique comprenant un résonateur mécanique 1 et une unité électronique 2 de mise en oeuvre du gyromètre.

Cette unité électronique 2 comprend une boucle 3 de contrôle de l'amplitude de la vibration du résonateur mécanique 1, laquelle boucle 3 reçoit les signaux 4 de détection moteur (électrodes d'excitation) du résonateur 1 qui sont appliqués à un circuit 5 de mesure d'amplitude dont la sortie est connectée à un comparateur 6 recevant également un signal 7 de consigne d'amplitude ; la sortie du comparateur 6 est connectée à un circuit correcteur 8 dont la sortie délivre un signal 9 de commande de gain P. Les signaux 4 de détection moteur sont également appliqués à un réseau déphaseur 10 dont le signal de sortie est appliqué à un circuit multiplicateur 11 recevant également le signal 9 de commande de gain P. Le signal de sortie du circuit multiplicateur 12 est le signal 12 d'excitation ou de commande moteur appliqué aux électrodes d'excitation.

L'unité électronique 2 comprend également une boucle gyrométrique 13 dont l'entrée reçoit les signaux 14 de détection Coriolis délivrés par les électrodes de détection du résonateur 1 et dont une sortie délivre un signal 15 à destination des électrodes de détection. Une autre sortie de la boucle gyrométrique 13 délivre un signal de mesure S.

Le dispositif illustré à la figure 1 fournit donc deux signaux, à savoir le signal de commande de gain P et le signal de mesure S de sortie, qui tous deux sont des signaux analogiques continus.

La rotation externe appliquée autour de l'axe sensible du résonateur mécanique est alors estimée à partir du signal gyrométrique S de sortie selon la formule :

$$\Omega_{est} = Fe.S + S_o$$

dans laquelle Fe est le facteur d'échelle gyrométrique et $S_o$ le biais gyrométrique.

Actuellement, il est connu, certes, de compenser les mesures gyrométriques en fonction de la température.

Une compensation thermique efficace de la mesure gyrométrique doit tenir compte des variations de température du résonateur mécanique lui-même. Ce résultat pourrait bien entendu être obtenu grâce à l'implantation d'une sonde de température sur ou dans le résonateur proprement dit. Toutefois, une telle solution n'est pas envisageable car la seule présence d'une sonde sur ou dans le résonateur perturberait sa vibration, et le fonctionnement du dispositif de mesure gyrométrique en serait altéré.

De ce fait, il est connu de disposer une sonde de température au plus près du résonateur, mais sans contact physique avec celui-ci. Ce n'est alors pas la température exacte du résonateur qui est détectée, mais celle de l'ambiance dans laquelle il est situé : cette solution est insuffisamment précise. En outre, la mise en place d'une sonde de température au plus près du résonateur est compliquée car il y a peu de place disponible à cet effet.

Enfin, il faut souligner que le recours à une sonde de température entraîne un surcoût qui est jugé inacceptable dans le cadre de la recherche d'une solution aussi peu coûteuse que possible.

Dans les dispositifs gyrométriques à résonateur à plusieurs poutres vibrantes tels que ceux décrits dans les documents FR 2 692 349 et FR 2 812 386, la fréquence de vibration des poutres varie linéairement en fonction de la température. Dans de tels dispositifs, la détection d'un signal représentatif de la fréquence de vibration permet, à travers la connaissance de la fréquence, de connaître la température du résonateur vibrant. Cette solution est très performante car, du fait que la fréquence détectée est caractéristique du résonateur, c'est bien à la température du résonateur lui-même que l'on a accès par cette voie.

Toutefois, si cette solution est satisfaisante sur le plan théorique, la conversion fréquence-tension n'est pas simple à réaliser en analogique. En règle générale, l'information doit être traitée numériquement. Or, il est requis par la pratique que les solutions évoluées recherchées aujourd'hui restent compatibles (par exemple dans le contexte d'une rénovation) avec les dispositifs gyroscopiques existants qui mettent en oeuvre des systèmes analogiques de traitement de l'information.

Par conséquent, l'accès à la température interne du résonateur par le biais d'une détection de la fréquence de vibration de ce résonateur représente une solution qui doit, elle aussi, être écartée.

Le document US-A-5 806 364 décrit la compensation en température d'un capteur gyrométrique à résonateur mécanique avec une boucle de contrôle de l'amplitude de la vibration du résonateur mécanique, impliquant un signal de commande de gain qui varie de façon monotone par rapport à la température interne du résonateur et une boucle gyrométrique propre à délivrer un signal de vitesse angulaire. À partir de valeurs du signal de commande de gain des valeurs de biais gyrométrique son générées, et ces valeurs sont additionnées au signal de vitesse angulaire pour ainsi compenser ce dernier en fonction de la température interne du résonateur mécanique.

Or une compensation thermique tenant compte, de façon plus exacte et plus simple qu'actuellement, de la température propre et instantanée du résonateur devient une nécessité devant les exigences des utilisateurs qui requièrent des dispositifs de mesure gyrométriques, et notamment gyroscopiques, toujours plus précis.

L'invention a donc pour but de proposer une solution perfectionnée qui permette cependant d'effectuer une compensation thermique sur la rotation détectée d'une façon au moins aussi précise, mais de façon plus simple que ce qui est fait actuellement avec la mise en oeuvre d'une sonde dans l'environnement du résonateur, et sans avoir recours à une électronique numérique.

A cette fin, selon un premier de ses aspects l'invention propose un procédé de mesure gyrométrique compensée en fonction de la température interne instantanée d'un résonateur dans un dispositif de mesure gyrométrique comportant :

- au moins un résonateur mécanique,
- une boucle de contrôle de l'amplitude de la vibration du résonateur mécanique, et
- une boucle gyrométrique propre à délivrer un signal gyrométrique (S) de sortie,
  lequel procédé se caractérise, conformément à l'invention,
- en ce qu'on établit la commande de gain (P) de la boucle de contrôle d'amplitude de la vibration pour qu'elle varie comme une fonction monotone de la température interne dudit résonateur mécanique dans une plage de température donnée,
- en ce que, au cours d'une étape initiale de calibrage, on établit et on mémorise une correspondance entre, d'une part, les valeurs du facteur d'échelle gyrométrique (Fe) et du biais gyrométrique ($S_o$) qui sont tous deux fonction de la température interne du résonateur mécanique et, d'autre part, les valeurs du signal de commande de gain (P), soit F(P) et Q(P) les modèles respectifs de (Fe) et ($S_o$) ainsi définis, et
- en ce que, en opération, on réalise les opérations suivantes :

$$P \;\rightarrow\; F(P)$$

$$P \;\rightarrow\; Q(P)$$

$$\Omega'_{est} \;=\; F(P).S \;+\; Q(P)$$

Grâce à ces dispositions, on obtient une estimation $\Omega'_{est}$ plus exacte, compensée en fonction de la température interne du résonateur mécanique, de la rotation mécanique appliquée autour de l'axe sensible du résonateur mécanique.

L'invention se fonde essentiellement sur les considérations qui suivent.

Les signaux de commande de gain P et de mesure S sont tous deux des fonctions de la température. Le signal de commande de gain P, fonction de la température interne du résonateur, étant disponible, il est alors envisageable, en choisissant cette commande de gain P comme une fonction monotone de la température, de paramétrer ou modéliser le signal de mesure S en fonction du signal P pour compenser, au moins en partie, les variations thermiques du signal de mesure S et améliorer ainsi la stabilité en température du dispositif et ses performances de mesure.

De préférence, la commande de gain P de la boucle de contrôle d'amplitude varie comme une fonction monotone croissante, et avantageusement alors du premier ordre, de la température interne dudit résonateur mécanique de sorte que la mise en oeuvre soit simplifiée.

Les dispositions conformes à l'invention peuvent avantageusement être mises en oeuvre de manière à améliorer la stabilité en température dans une plage de température donnée qui est comprise entre -40°C et +85°C.

Les dispositions du procédé exposé ci-dessus trouvent une application préférée bien que non exclusive pour un résonateur mécanique du type à au moins une poutre vibrante, et de façon tout particulièrement efficace pour un résonateur à quatre poutres vibrantes des types décrits dans les documents FR 2 692 349 et FR 2 812 386.

Selon un second de ses aspects, l'invention propose un dispositif de mesure gyrométrique comportant :

- au moins un résonateur mécanique,
- une boucle de contrôle de l'amplitude de la vibration du résonateur mécanique, et
- une boucle gyrométrique propre à délivrer un signal gyrométrique (S) de sortie,
  lequel dispositif, étant agencé conformément à l'invention, se caractérise en ce que :
- la boucle de contrôle d'amplitude de la vibration est agencée de manière telle que sa commande de gain (P) varie comme une fonction monotone de la température interne dudit résonateur mécanique dans une plage de température donnée,
- des moyens de mémorisation sont prévus pour mémoriser une correspondance établie, au cours d'une étape initiale de calibrage, entre, d'une part, les valeurs du facteur d'échelle gyrométrique (Fe) et du biais gyrométrique (S$_o$) tous deux fonction de la température interne du résonateur mécanique et, d'autre part, les valeurs du signal de commande de gain (P), soit F(P) et Q(P) les modèles respectifs de (Fe) et (S$_o$) ainsi définis, et

- des moyens de traitement d'information sont prévus qui sont propres, en opération, à réaliser, pour chaque valeur du gain (P), les opérations suivantes :

$$P \rightarrow F(P)$$

$$P \rightarrow Q(P)$$

$$\Omega'_{est} = F(P).S + Q(P)$$

Ainsi, le dispositif de mesure gyrométrique conforme à l'invention est apte à fournir un signal analogique de sortie, compensé en fonction de la température interne du résonateur mécanique, représentatif de la rotation mécanique appliquée autour de l'axe sensible du résonateur mécanique.

Dans un mode de réalisation préféré du dispositif conforme à l'invention, la commande de gain (P) de la boucle de contrôle d'amplitude est agencée pour varier comme une fonction monotone croissante, et avantageusement du premier ordre, de la température interne dudit résonateur mécanique.

Dans un mode de réalisation pratique, le dispositif est agencé de manière que la compensation en température soit assurée une plage comprise entre -40°C et +85°C.

Le dispositif de mesure gyrométrique conforme à l'invention est apte à trouver une application tout particulièrement intéressante, bien que non exclusive, lorsque le résonateur mécanique est un résonateur à au moins une poutre vibrante, et tout particulièrement pour un résonateur à quatre poutres vibrantes du type enseigné dans les documents FR 2 692 349 et FR 2 812 386.

La solution proposée dans le cadre de la présente invention est particulièrement originale et intéressante car elle évite les inconvénients et insuffisances des solutions antérieures en ce sens qu'elle évite le recours à une sonde de température, qu'elle évite la conversion numérique-analogique imposée par la détection de la fréquence du résonateur en tant que grandeur représentative de la température interne du résonateur, et elle met en oeuvre une transposition d'une grandeur purement analogique (le signal de commande de gain (P)) qui, certes, n'est pas une représentation exacte de la température interne du résonateur, mais en est cependant une représentation suffisamment fidèle pour pouvoir conduire à l'information souhaitée dans le respect de la tolérance d'erreur admissible dans la pratique.

L'invention sera mieux comprise à la lecture de la description détaillée qui suit d'un mode de réalisation préféré donné à titre purement illustratif. Dans cette description, on se réfère aux dessins annexés sur lesquels :

- la figure 1 est une représentation très schématique par blocs fonctionnels d'un dispositif de mesure gyrométrique de l'état de la technique visé par l'invention ; et
- la figure 2 est une représentation très schématique par blocs fonctionnels d'un dispositif de mesure gyrométrique correspondant à celui de la figure 1 et perfectionné conformément à l'invention.

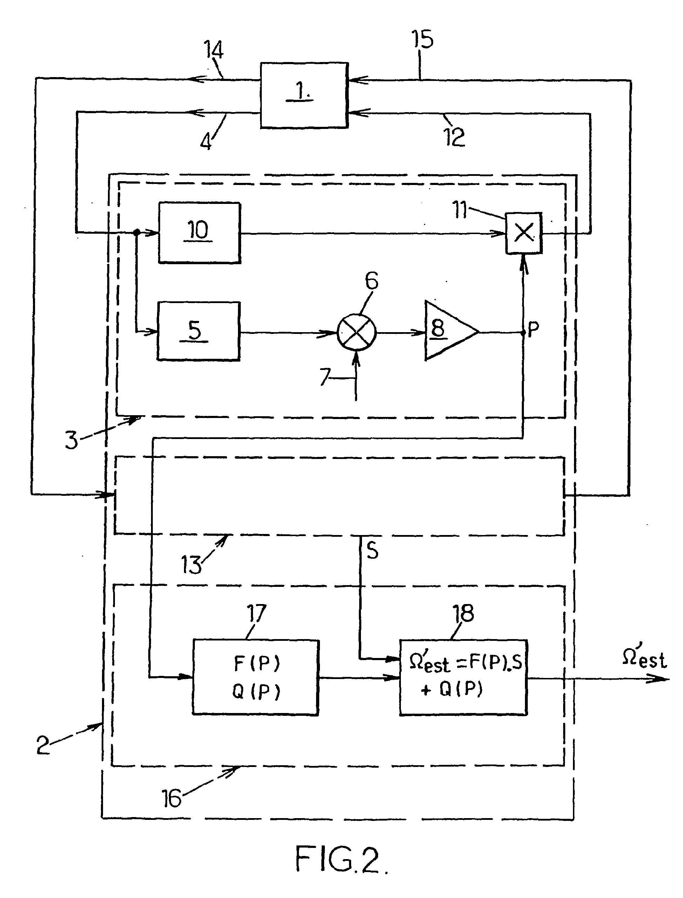

Le dispositif illustré sous forme schématique à la figure 2 est constitué de la même manière que celui de la figure 1, à cette différence près que l'unité électronique 2 de mise en oeuvre du gyromètre est en outre pourvue d'une unité de traitement 16.

Cette unité de traitement 16 comprend des moyens de mémorisation 17 propres à mémoriser une correspondance établie, au cours d'une étape initiale de calibrage (par exemple dans une étuve sur toute la plage de température souhaitée), entre, d'une part, les valeurs du facteur d'échelle gyrométrique Fe et du biais gyrométrique S$_o$ tous deux fonction de la température interne du résonateur mécanique et, d'autre part, les valeurs du signal de commande de gain P ; on désignera par F(P) et Q(P) les modèles respectifs de Fe et S$_o$ ainsi définis. Les moyens de mémorisation 17 possèdent une entrée connectée à la sortie du circuit correcteur 8 de manière que le signal de commande de gain P soit délivré en permanence auxdits moyens de mémorisation 17 afin que ceux-ci établissent, en fonction des informations tenues en mémoire, les valeurs F(P) et Q(P) pour chaque valeur de gain P.

Les moyens de mémorisation 17 possèdent une sortie raccordée à une entrée de moyens 18 de traitement d'information dont une autre entrée est connectée à la sortie de la boucle gyrométrique 13 et reçoit le signal de mesure S. Les moyens 18 de traitement d'information sont agencés pour calculer une grandeur $\Omega'_{est}$ telle que

$$\Omega'_{est} = F(P).S + Q(P)$$

C'est cette grandeur $\Omega'_{est}$ qui est délivrée en sortie de l'unité électronique 2 de mise en oeuvre du gyromètre, en lieu et place de la valeur S délivrée par les dispositifs classiques (figure 1).

Enfin, la boucle 3 de contrôle de l'amplitude de la vibration du résonateur mécanique 1 est agencée de manière telle que sa commande de gain P varie comme une fonction monotone de la température interne dudit résonateur 1 dans une plage de température donnée.

Avantageusement, la commande de gain P de la boucle 3 de contrôle d'amplitude est agencée pour varier comme une fonction monotone croissante de la température interne dudit résonateur 1, et de préférence, dans un but de simplification des moyens mis en oeuvre, on fait en sorte que cette variation soit une fonction monotone croissante du premier ordre. Bien entendu, selon la variation et/ou la précision souhaitées, on pourra avoir recours à un seul polynôme notamment d'ordre 1 propre à définir la totalité de la courbe de variation ou bien définir la courbe de variation comme une succession de tronçons définis par une pluralité de polynômes notamment d'ordre 1.

De plus, on prévoit, en pratique, que cette variation sous forme d'une fonction monotone, avantageusement croissante et de préférence du premier ordre, soit assurée dans une plage de fonctionnement comprise entre environ -40° et +85°.

Dans ces conditions, l'unité de traitement 16, après une étape initiale de calibrage (par exemple effectuée par l'utilisateur, avec ses moyens électroniques propres) pour charger les moyens de mémorisation 17 et à partir des deux signaux d'entrée P délivré par la boucle 3 de contrôle d'amplitude et S délivré par la boucle gyrométrique 13, est en mesure de réaliser les opérations suivantes :

$$P \rightarrow F(P)$$

$$P \rightarrow Q(P)$$

$$\Omega'_{est} = F(P).S + Q(P)$$

la grandeur $\Omega'_{est}$ étant compensée, au moins en partie, en fonction de la température interne du résonateur mécanique 1.

Les dispositions conformes à l'invention peuvent trouver application dans tout dispositif de mesure gyrométrique à résonateur continu dans lequel la commande de gain P est une fonction monotone de la température interne du résonateur mécanique. Elles trouvent une application préférée dans les dispositifs à résonateur à poutre vibrante, et de façon encore plus préférée dans les dispositifs à résonateur à quatre poutres vibrantes du type décrit dans les documents FR 2 692 349 et FR 2 812 386.

**Revendications**

1. Procédé de mesure gyrométrique compensée en fonction de la température interne instantanée d'un résonateur dans un dispositif de mesure gyrométrique comportant :

   - au moins un résonateur mécanique (1),
   - une boucle (3) de contrôle de l'amplitude de la vibration du résonateur mécanique (1), et
   - une boucle gyrométrique (13) propre à délivrer un signal gyrométrique S de sortie,
   dans lequel
   - on établit la commande de gain P de la boucle (3) de contrôle d'amplitude de la vibration pour qu'elle varie comme une fonction monotone de la température interne dudit résonateur mécanique (1) dans une plage de température donnée,
   - au cours d'une étape initiale de calibrage, on établit et on mémorise (en 17) une correspondance entre, d'une part, les valeurs du facteur d'échelle gyrométrique Fe et du biais gyrométrique $S_o$ et, d'autre part, les valeurs du signal de commande de gain P, soit F(P) et Q(P) les modèles respectifs de Fe et $S_o$ ainsi définis, et
   - en opération, on réalise (en 17 et 18) les opérations suivantes :

   $$P \rightarrow F(P)$$

   $$P \rightarrow Q(P)$$

   $$\Omega'_{est} = F(P).S + Q(P)$$

   ce grâce à quoi on obtient, sous forme analogique, une estimation $\Omega'$ est plus exacte, compensée en fonction de la température interne du résonateur, de la rotation mécanique appliquée autour de l'axe sensible du résonateur mécanique (1).

2. Procédé selon la revendication 1, **caractérisé en ce que** la commande de gain P de la boucle (3) de contrôle d'amplitude varie comme une fonction monotone croissante de la température interne dudit résonateur mécanique (1).

3. Procédé selon la revendication 2, **caractérisé en ce que** la commande de gain P de la boucle (3) de contrôle d'amplitude varie comme une fonction monotone croissante du premier ordre de la température interne dudit résonateur mécanique (1).

4. Procédé selon l'une quelconque des revendications 1 à 3, **caractérisé en ce que** la susdite plage de température donnée est comprise entre -40°C et +85°C.

5. Procédé selon l'une quelconque des revendications 1 à 4, **caractérisé en ce que** le résonateur mécanique (1) est un résonateur à au moins une poutre vibrante, notamment à quatre poutres vibrantes.

6. Dispositif de mesure gyrométrique comportant :

   - au moins un résonateur mécanique (1),
   - une boucle (3) de contrôle de l'amplitude de la vibration du résonateur mécanique, et
   - une boucle gyrométrique (13) propre à délivrer un signal gyrométrique S de sortie,
   dans lequel
   - la boucle (3) de contrôle d'amplitude de la vibration est agencée de manière telle que sa commande de gain P varie comme une fonction monotone de la température interne dudit résonateur mécanique dans une plage de température donnée,
   - des moyens (17) de mémorisation sont prévus pour mémoriser une correspondance établie, au cours d'une étape initiale de calibrage, entre, d'une part, les valeurs du facteur d'échelle gyrométrique Fe et du biais gyrométrique $S_o$ et, d'autre part, les valeurs du signal de commande de gain P, soit F(P) et Q(P) les modèles respectifs de Fe et $S_o$ ainsi définis, et
   - des moyens (18) de traitement d'information sont prévus qui sont propres, en opération, à réaliser les opérations suivantes :

   $$P \rightarrow F(P)$$

   $$P \rightarrow Q(P)$$

   $$\Omega'_{est} = F(P).S + Q(P)$$

   ce grâce à quoi le dispositif de mesure gyrométrique est apte à fournir un signal analogique de sortie $\Omega'$ est, compensé en fonction de la température interne du résonateur mécanique (1), représentatif de la rotation mécanique appliquée autour de l'axe sensible du résonateur mécanique (1).

7. Dispositif selon la revendication 6, **caractérisé en ce que** la commande de gain P de la boucle (3) de contrôle d'amplitude est agencée pour varier comme une fonction monotone croissante de la température interne dudit résonateur mécanique (3).

8. Dispositif selon la revendication 7, **caractérisé en ce que** la commande de gain P de la boucle (3) de contrôle d'amplitude est agencée pour varier comme une fonction monotone croissante du premier ordre de la température interne dudit résonateur mécanique (1).

9. Dispositif selon l'une quelconque des revendications 6 à 8, **caractérisé en ce que** la susdite plage de température donnée est comprise entre -40°C et +85°C.

10. Dispositif selon l'une quelconque des revendications 6 à 9, **caractérisé en ce que** le résonateur mécanique (1) est un résonateur à au moins une poutre vibrante, notamment à quatre poutres vibrantes.

## Patentansprüche

1. Verfahren zur kompensierten gyrometrischen Messung abhängig von der augenblicklichen Innentemperatur eines Resonators in einer gyrometrischen Messvorrichtung, die aufweist:

   - mindestens einen mechanischen Resonator (1),
   - eine Amplitudenregelschleife (3) der Schwingung des mechanischen Resonators (1), und
   - eine gyrometrische Schleife (13), die ein gyrometrisches Ausgangssignal S liefern kann, wobei
   - die Verstärkungssteuerung P der Amplitudenregelschleife (3) der Schwingung so festgelegt wird, dass sie wie eine monotone Funktion der Innentemperatur des mechanischen Resonators (1) in einem gegebenen Temperaturbereich variiert,
   - während eines Anfangskalibrierungsschritts eine Entsprechung zwischen einerseits den Werten des gyrometrischen Skalierungsfaktors Fe und der gyrometrischen Abweichung $S_o$ und andererseits den Werten des Verstärkungssteuerungssignals P festgelegt und gespeichert (in 17) wird, mit F(P) und Q(P) den so definierten Modellen von Fe bzw. $S_o$, und
   - im Betrieb die folgenden Operationen (in 17 und 18) ausgeführt werden:

   $$P \rightarrow F(P)$$

   $$P \rightarrow Q(P)$$

$$\Omega'_{est} = F(P).S + Q(P)$$

wodurch in analoger Form eine genauere, abhängig von der Innentemperatur des Resonators kompensierte Schätzung $\Omega'_{est}$ der mechanischen Drehung erhalten wird, die um die Messachse des mechanischen Resonators (1) herum durchgeführt wird.

2.  Verfahren nach Anspruch 1, **dadurch gekennzeichnet, dass** die Verstärkungssteuerung P der Amplitudenregelschleife (3) wie eine zunehmende monotone Funktion der Innentemperatur des mechanischen Resonators (1) variiert.

3.  Verfahren nach Anspruch 2, **dadurch gekennzeichnet, dass** die Verstärkungssteuerung P der Amplitudenregelschleife (3) wie eine zunehmende monotone Funktion erster Ordnung der Innentemperatur des mechanischen Resonators (1) variiert.

4.  Verfahren nach einem der Ansprüche 1 bis 3, **dadurch gekennzeichnet, dass** der gegebene Temperaturbereich zwischen -40°C und +85°C liegt.

5.  Verfahren nach einem der Ansprüche 1 bis 4, **dadurch gekennzeichnet, dass** der mechanische Resonator (1) ein Resonator mit mindestens einem Schwingbalken, insbesondere mit vier Schwingbalken, ist.

6.  Gyrometrische Messvorrichtung, die aufweist:

    - mindestens einen mechanischen Resonator (1),
    - eine Amplitudenregelschleife (3) der Schwingung des mechanischen Resonators, und
    - eine gyrometrische Schleife (13), die ein gyrometrischen Ausgangssignal S liefern kann, wobei
    - die Amplitudenregelschleife (3) der Schwingung so gestaltet ist, dass ihre Verstärkungssteuerung P wie eine monotone Funktion der Innentemperatur des mechanischen Resonators in einem gegebenen Temperaturbereich variiert,
    - Speichereinrichtungen (17) vorgesehen sind, um eine während eines Anfangskalibrierungsschritts festgelegte Entsprechung zwischen einerseits den Werten des gyrometrischen Skalierungsfaktors Fe und der gyrometrischen Abweichung $S_o$ und andererseits den Werten des Verstärkungssteuerungssignals P zu speichern, mit F(P) und Q(P) den so definierten Modellen von Fe bzw. $S_o$, und
    - Informationsverarbeitungseinrichtungen (18)

vorgesehen sind, die im Betrieb geeignet sind, die folgenden Operationen auszuführen:

$$P \rightarrow F(P)$$

$$P \rightarrow Q(P)$$

$$\Omega'_{est} = F(P).S + Q(P)$$

wodurch die gyrometrische Messvorrichtung ein abhängig von der Innentemperatur des mechanischen Resonators (1) kompensiertes analoges Ausgangssignal $\Omega'_{est}$ liefern kann, das für die mechanische Drehung repräsentativ ist, die um die Messachse des mechanischen Resonators (1) herum durchgeführt wird.

7.  Vorrichtung nach Anspruch 6, **dadurch gekennzeichnet, dass** die Verstärkungssteuerung P der Amplitudenregelschleife (3) gestaltet wird, um wie eine zunehmende monotone Funktion der Innentemperatur des mechanischen Resonators (3) zu variieren.

8.  Vorrichtung nach Anspruch 7, **dadurch gekennzeichnet, dass** die Verstärkungssteuerung P der Amplitudenregelschleife (3) gestaltet wird, um wie eine zunehmende monotone Funktion erster Ordnung der Innentemperatur des mechanischen Resonators (1) zu variieren.

9.  Vorrichtung nach einem der Ansprüche 6 bis 8, **dadurch gekennzeichnet, dass** der gegebene Temperaturbereich zwischen -40°C und +85°C liegt.

10. Vorrichtung nach einem der Ansprüche 6 bis 9, **dadurch gekennzeichnet, dass** der mechanische Resonator (1) ein Resonator mit mindestens einem Schwingbalken, insbesondere mit vier Schwingbalken, ist.

**Claims**

1.  A rate gyro measurement method that is compensated as a function of the instantaneous internal temperature of a resonator in a gyro measurement device comprising:

    · at least one mechanical resonator(1),
    · a loop (3) for controlling the amplitude of the vibration of the mechanical resonator (1); and

· a gyro loop (13), suitable for delivering an output gyro signal S;

wherein the control of gain P of the loop (3) for controlling the amplitude of the vibration is established so as to vary as a monotonic function of the internal temperature of said mechanical resonator (1), over a given temperature range;

during an initial calibration stage, correspondences are established and memorized (in 17) between firstly, the values of the gyro scale factor Fe and the gyro bias $S_0$ and, secondly, the values of the signal for controlling gain P, i.e. F(P) and Q(P) being thus defined as respective models of Fe and $S_0$; and

in operation, the following operations are performed (in 17 and 18):

$$P \rightarrow F(P)$$

$$P \rightarrow Q(P)$$

$$\Omega'_{est} = F(P).S + Q(P)$$

whereby a more accurate estimate $\Omega'_{est}$, compensated as a function of the internal temperature of the resonator, of the mechanical rotation applied about the sensing axis of the mechanical resonator (1) is obtained in analog form.

2. The method according to claim 1, **characterized in that** the control of gain P of the loop (3) for controlling amplitude varies as an increasing monotonic function of the internal temperature of said mechanical resonator (1).

3. The method according to claim 2, **characterized in that** the gain control P of the loop (3) for controlling amplitude varies as an increasing monotonic function of the first order of the internal temperature of said mechanical resonator (1).

4. The method according to any one of claims 1-3, **characterized in that** the above-mentioned given temperature range extends from -40°C to +85°C.

5. The method according to any one of claims 1-4, **characterized in that** the mechanical resonator (1) is a resonator having at least one vibrating beam, and in particular four vibrating beams.

6. A rate gyro measurement device comprising:

· at least one mechanical resonator (1);
· a loop (3) for controlling the amplitude of the vibration of the mechanical resonator; and
· a gyro loop (13) suitable for delivering an output gyro signal S;

wherein

- the loop (3) for controlling the amplitude of the vibration is arranged in such a manner that the control of its gain P varies as a monotonic function of the internal temperature of said mechanical resonator over a given temperature range;

- memory means (17) are provided for storing correspondences established during an initial calibration step between, firstly, the values of the gyro scale factor Fe and of the gyro bias $S_0$ and, secondly, the values of the signal for controlling gain P, i.e. F(P) and Q(P) being respective models of Fe and $S_0$ thus defined; and

- information processor means (18) are provided suitable, in operation, for performing the hollowing operations:

$$P \rightarrow F(P)$$

$$P \rightarrow Q(P)$$

$$\Omega'_{est} = F(P).S + Q(P)$$

whereby the gyro measurement device is suitable for delivering an output analog signal $\Omega'_{est}$, compensated as a function of the internal temperature of the mechanical resonator (1), which is representative of the mechanical rotation applied about the sensing axis of the mechanical resonator (1).

7. The device according to claim 6, **characterized in that** the control of gain P of the loop (3) for controlling amplitude is arranged to vary as an increasing monotonic function of the internal temperature of said mechanical resonator (1).

8. The device according to claim 7, **characterized in that** the control of gain P of the loop (3) for controlling amplitude is arranged to vary as an increasing monotonic function of the first order of the internal temperature of said mechanical resonator (1).

9. The device according to any one of claims 6-8, **characterized in that** the above-mentioned given temperature range extends from -40°C to +85°C.

10. The device according to any one of claims 6-9, **characterized in that** the mechanical resonator (1) is a resonator having at least one vibrating beam, and in particular four vibrating beams.

EP 1 861 680 B1

FIG.1.

10

FIG.2.

**EP 1 861 680 B1**

## RÉFÉRENCES CITÉES DANS LA DESCRIPTION

**Documents brevets cités dans la description**

- FR 2692349
- FR 2812386
- US 5806364 A